# EUROPEAN PATENT APPLICATION

(11) **EP 4 322 581 A1**
(43) Date of publication of application: **14.02.2024**
(21) Application number: 22189766.3
(22) Date of filing: 10.08.2022
(51) Int. Cl.: H04W 12/06, H04W 12/08

(54) **METHOD AND APPARATUS TO CONTROL NETWORK SLICES REQUESTED BY A USER EQUIPMENT**

(30) Priority: 09.08.2022 EP 22189605
(71) Applicant: Nokia Technologies Oy, 02610 Espoo (FI)
(72) Inventor: WON, Sung Hwan, Flower Mound, TX, 75028 (US); CASATI, Alessio, West Molesey, KT81NT (GB)
(74) Representative: Samson & Partner Patentanwälte mbB

(57) **Abstract**

Techniques to update a user equipment configuration which has requested a network slice when registering to a network are provided. For example, a method to update a user equipment configuration is disclosed. The method comprises: after a network slice-specific authentication and authorization procedure for a first single network slice selection assistance information associated with the requested network slice is successfully completed, sending to the user equipment a configuration update command to update a user equipment configuration of the user equipment, based on a determination that no common network slice simultaneous registration group value is associated with the first single network slice selection assistance information and all single network slice selection assistance information in an allowed NSSAI for the user equipment. The configuration update command comprising a new pending NSSAI for the user equipment, the pending NSSAI excluding the first single network slice selection assistance information.

## Description

### TECHNICAL FIELD

The subject disclosure generally relates to wireless communication systems and more particularly, to wireless communication systems allowing updates of a user device in a network. Yet more particularly, the subject disclosure provides methods and apparatuses for updating a user device requesting a network slice when registering to a network of a wireless communication system.

### BACKGROUND

Wireless communication systems are under constant development. There is a constant need for wireless communication systems with higher data rates and high quality of service. Reliability requirements for wireless communication systems are constantly rising and ways and means to ensure reliable connections in wireless communication systems for data traffic while keeping transmission delays minimal are constantly under development.

Developing networks enables new services to customers. One way of providing services to customers of a wireless communication system is network slicing, which enables offering connectivity, quality of service and data processing solutions tailored to specific customers' requirements. A network slice is a logical end-to-end virtual network that can be dynamically created in a wireless communication system and that provides specific capabilities and characteristics. Multiple network slices may be created on top of a common shared physical network infrastructure of a wireless communication system for network services that may have different requirements on latency, reliability, throughput and mobility. For example, in 5G wireless communication system, network slicing is a key feature to support different network services using the same underlying physical network infrastructure.

A user equipment may request registration to one or more network slices of a wireless communication system, however, not all available network slices may be compatible to each other. Therefore, restrictions to simultaneous registration to multiple network slices of a wireless communication system may have to be applied.

The use of network slices may require techniques for controlling and managing requests to register to multiple network slices of a wireless communication system, in particular when restrictions to simultaneous registrations may have to be applied.

### SUMMARY

According to a first aspect of the subject disclosure, a method to update a user equipment configuration of a user equipment (UE) which has requested a network slice when registering to a network is provided. The method comprises, after a network slice-specific authentication and authorization (NSSAA) procedure for a first single network slice selection assistance information (S-NSSAI) associated with the requested network slice is successfully completed, sending to the user equipment a configuration update command to update a user equipment configuration of the user equipment, based on a determination that no common network slice simultaneous registration group (NSSRG) value is associated with the first single network slice selection assistance information and all single network slice selection assistance information in an allowed NSSAI for the user equipment. The configuration update command comprises a new pending NSSAI for the user equipment, the pending NSSAI excluding the first single network slice selection assistance information.

In a first group of embodiments of the first aspect, the method may further comprise after a network slice-specific authentication and authorization procedure for a first single network slice selection assistance information associated with the requested network slice is successfully completed, sending a configuration update command to the user equipment to update the user equipment configuration of the user equipment, based on a determination that at least one common network slice simultaneous registration group value is associated with the first single network slice selection assistance information and all single network slice selection assistance information in the allowed NSSAI. The configuration update command comprises a new allowed NSSAI including the first single network slice selection assistance information.

In a second group of embodiments of the first aspect, the method may comprise after a network slice-specific authentication and authorization procedure for a first single network slice selection assistance information associated with the requested network slice is successfully completed, sending the configuration update command to the user equipment to update the user equipment configuration of the user equipment, based on a determination that no common network slice simultaneous registration group value is associated with the first single network slice selection assistance information and all single network slice selection assistance information in the allowed NSSAI for the user equipment, and a determination that the first single network slice selection assistance information has a higher priority than all single network slice selection assistance information in the allowed NSSAI for the user equipment. The configuration update command comprises a new allowed NSSAI instead of the new pending NSSAI for the user equipment, the new allowed NSSAI including the first single network slice selection assistance information.

In other embodiments of the first aspect, the method may comprise, if the allowed NSSAI for the user equipment does not exist, the step of sending of the configuration update command to the user equipment to update the user equipment configuration of the user equipment,
- as in the first aspect of the invention, is based on a determination that no common network slice simultaneous registration group value is associated with the first single network slice selection assistance information and all single network slice selection assistance information in the most recent requested NSSAI;
- as in the first group of embodiments of the first aspect is based on a determination that at least one common network slice simultaneous registration group value is associated with the first single network slice selection assistance information and all single network slice selection assistance information in the most recent requested NSSAI; and
- as in the second group of embodiments of the first aspect is based on a determination that no common network slice simultaneous registration group value is associated with the first single network slice selection assistance information and all single network slice selection assistance information in the most recent requested NSSAI, and a determination that the first single network slice selection assistance information has a higher priority than all single network slice selection assistance information in the most recent requested NSSAI.

In some embodiments of the first aspect, the steps may be performed by the network, e.g., by one or more network entities. Such a network entity may, e.g., be an access and mobility management function (AMF) of a network. For example, the network supports network slicing.

According to a second aspect of the subject disclosure, a user equipment is provided. The user equipment may comprise transmitting means being adapted to send a registration request message to register with one or more network slices of a network, receiving means being adapted to receive a registration accept message sent by the network, the registration accept message comprising a first pending NSSAI including at least one of one or more single network slice selection assistance information associated with the one or more network slices, and to receive a configuration update command sent by the network, the configuration update command comprising a second pending NSSAI, and executing means being adapted to replace the first pending NSSAI with the second pending NSSAI.

According to the second aspect of the subject disclosure, the transmitting means is configured to include in the registration request message an indication that the user equipment supports receiving a pending NSSAI via the configuration update command.

In some embodiments of the second aspect, the user equipment configuration comprises a parameter indicating whether the user equipment can request a single network slice selection assistance information not sharing a common network slice simultaneous registration group value with any single network slice selection assistance information in the stored or received pending NSSAI. The parameter indicating whether the user equipment can request a single network slice selection assistance information not sharing a common network slice simultaneous registration group value with any single network slice selection assistance information in the stored or received pending NSSAI, can be updated via the user equipment configuration update procedure (i.e. an access and mobility management function located in the serving network updates the parameter) or via the user equipment parameters update procedure (i.e. a unified data management located in the home network updates the parameter).

According to a third aspect of the subject disclosure, a network entity in network is provided. The network entity comprises receiving means adapted to receive a registration request message sent by a user equipment to register with a network slice of the network, transmitting means adapted to send a configuration update command to the user equipment, and executing means being adapted to, after a network slice-specific authentication and authorization procedure for a first single network slice selection assistance information associated with the requested network slice is successfully completed, send to a user equipment a configuration update command to update a user equipment configuration of the user equipment, based on a determination that no common network slice simultaneous registration group value is associated with the first single network slice selection assistance information and all single network slice selection assistance information in an allowed NSSAI for the user equipment. The configuration update command comprises a new pending NSSAI for the user equipment, the pending NSSAI excluding the first single network slice selection assistance information.

According to a first group of embodiments of the third aspect, the executing means are further adapted to, after a network slice-specific authentication and authorization procedure for a first single network slice selection assistance information associated with the requested network slice is successfully completed, send a configuration update command to the user equipment to update the user equipment configuration of the user equipment, based on a determination that at least one common network slice simultaneous registration group value is associated with the first single network slice selection assistance information and all single network slice selection assistance information in the allowed NSSAI. The configuration update command comprising a new allowed NSSAI that includes the first single network slice selection assistance information.

According to a second group of embodiments of the third aspect, the executing means is further adapted to, after a network slice-specific authentication and authorization procedure for a first single network slice selection assistance information associated with the requested network slice is successfully completed, send a configuration update command to the user equipment to update the user equipment configuration, based on a determination that no common network slice simultaneous registration group value is associated with the first single network slice selection assistance information and all single network slice selection assistance information in the allowed NSSAI for the user equipment, and a determination that the first single network slice selection assistance information has a higher priority than all single network slice selection assistance information in the allowed NSSAI for the user equipment. The configuration update command comprising a new allowed NSSAI for the user equipment, the new allowed NSSAI including the first single network slice selection assistance information.

In some embodiments of the third aspect, if the allowed NSSAI for the user equipment does not exist, the sending of the configuration update command to the user equipment to update the user equipment configuration of the user equipment,
- of the third aspect is based on a determination that no common network slice simultaneous registration group value is associated with the first single network slice selection assistance information and all single network slice selection assistance information in the most recent requested NSSAI,
- of the first group of embodiments of the third aspect is based on a determination that at least one common network slice simultaneous registration group value is associated with the first single network slice selection assistance information and all single network slice selection assistance information in the most recent requested NSSAI.
- and of the second group of embodiments of the third aspect is based on a determination that no common network slice simultaneous registration group value is associated with the first single network slice selection assistance information and all single network slice selection assistance information in the most recent requested NSSAI, and a determination that the first single network slice selection assistance information has a higher priority than all single network slice selection assistance information in the most recent requested NSSAI.

In some embodiments of the third aspect, the executing means is adapted to carry out the steps assigned to the executing means of the third aspect, based on a determination that a user equipment sends via the registration request an indication that it supports receiving a pending NSSAI.

In other embodiments of the third aspect, the configuration update command comprises an indication that the user equipment is to perform registration to register with the network, based on a determination that a network slice-specific authentication and authorization procedure for an single network slice selection assistance information requested by the user equipment during registration to the network entity is successfully completed, that an indication that the user equipment does not support receiving a pending NSSAI is received, and that no common network slice simultaneous registration group value is associated with the single network slice selection assistance information and all single network slice selection assistance information in the allowed NSSAI. In some of these embodiments of the third aspect, the indication that the user equipment is to perform registration is an information element in the configuration update command, and wherein the executing means is further adapted to set a registration requested bit of the information element to a value which indicates that the user equipment is to perform registration.

In some embodiments of the second and third aspects, the user equipment may comprise a user device or terminal and the network entity may comprise an access and mobility management function (AMF) of a network. For example, the network may support network slicing.

According to a fourth aspect of the subject disclosure, a computer program product is provided. The computer program product may comprise instructions which, when the computer program product is executed by a computer, cause the computer to carry out a method according to the first aspect and its various embodiments.

According to a fifth aspect of the subject disclosure, a computer-readable storage medium is provided. The computer-readable storage medium may have stored thereon the computer program product of the fourth aspect.

According to a sixth aspect of the subject disclosure, a data carrier signal carrying the computer program product of the fourth aspect is provided.

The above-noted aspects and features may be implemented in systems, apparatuses, methods, articles and/or non-transitory computer-readable media depending on the desired configuration. The subject disclosure may be implemented in and/or used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### LIST OF ABBREVIATIONS

In the subject disclosure, the following abbreviations are used and should be understood in accordance with the given definitions:
- 3GPP: 3^{rd} Generation Partnership Project
- NSSAA: Network slice-specific authentication and authorization
- NSSAI: Network slice selection assistance information
- NSSRG: Network slice simultaneous registration group
- PLMN: Public Land Mobile Network
- S-NSSAI: Single NSSAI
- SNPN: Standalone Non-Public Network
- TS: Technical specification
- UE: User equipment

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example communication system comprising a base station and a plurality of communication devices;
FIG. 2 shows a schematic diagram of an example mobile communication device;
FIG. 3 shows a schematic diagram of an example control apparatus;
FIG. 4 illustrates a network slicing scenario;
FIG. 5 illustrates an example of a sequence of operations when a UE requests one or more network slices of a network;
FIG. 6 illustrates a flow chart of a method performed by a network for updating a user equipment according to some embodiments;
FIG. 7 illustrates a flow chart of a method for updating a user equipment according to some embodiment performed by the UE; and
FIG. 8 illustrates a flow chart of a further method for updating a user equipment according to some embodiment performed by the UE.

### DETAILED DESCRIPTION

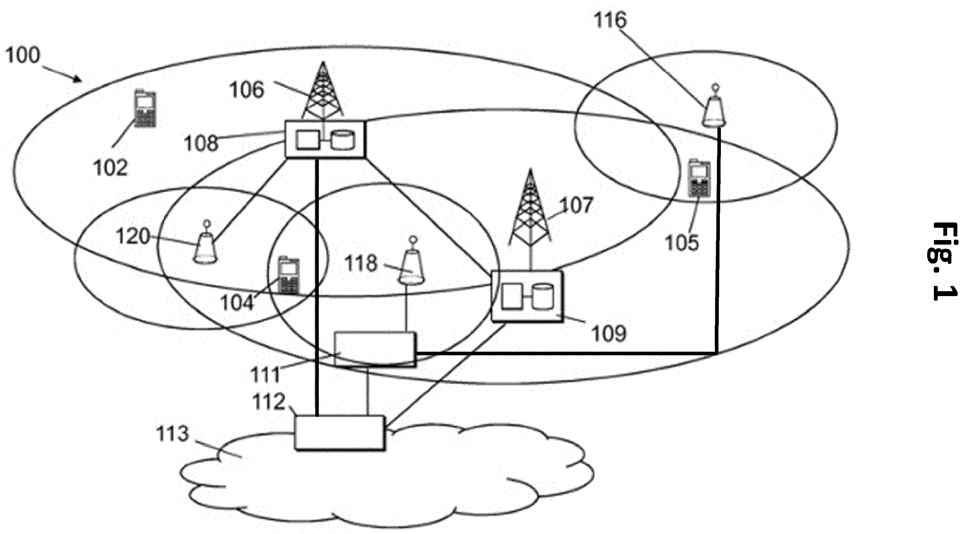

Before explaining the examples in detail, certain general principles of a wireless communication system and mobile communication devices are briefly explained with reference to FIGS. 1 to 3 to assist in understanding the technology underlying the described examples.

In a wireless communication system 100, such as that shown in FIG. 1, mobile communication devices (otherwise referred to as user devices or User Equipment (UE)) 102, 104, 105 are provided wireless access via at least one base station (e.g., next generation NB, gNB), a similar wireless transmitting and/or receiving node or radio access network node. Base stations may be controlled or assisted by at least one appropriate controller apparatus, so as to enable operation thereof and management of the mobile communication devices in communication with the base stations. The controller apparatus may be located in a Radio Access Network (RAN) (e.g., wireless communication system 100) or in a Core Network (CN) (not shown) and may be implemented as one central apparatus or its functionality may be distributed over several apparatuses. The controller apparatus may be part of the base station or may be a separate entity connected to a base station such as a Radio Network Controller (RNC). In FIG. 1, control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in the RNC.

In FIG. 1, base stations 106 and 107 are shown as connected to a wider communications network 113 via gateway 112. A further gateway function may be provided to connect to another network.

As used herein, the term "base station" has the full breadth of its ordinary meaning, and at least includes a wireless communication station installed at a fixed location and used to communicate as part of a wireless telephone system or radio system. The communication area (or coverage area) of the base stations may be referred to as a "cell." The base stations and the UEs may be configured to communicate over the transmission medium using any of various Radio Access Technologies (RATs), also referred to as wireless communication technologies, as defined in various telecommunication standards described hereinbelow. As illustrated in FIG. 1, while one of the base stations may act as a "serving cell" for UEs, each UE may also be capable of receiving signals from (and possibly within communication range of) one or more other cells (which might be provided by the base stations and/or any other base stations), which may be referred to as "neighboring cells".

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example, Wireless Local Area Network (WLAN) and may be WLAN Access Points (APs). The communication devices 102, 104, 105 may access the communication system based on various access techniques, such as Code Division Multiple Access (CDMA), or Wideband CDMA (WCDMA). Other non-limiting examples comprise Time Division Multiple Access (TDMA), Frequency Division Multiple Access (FDMA) and various schemes thereof such as the Interleaved Frequency Division Multiple Access (IFDMA), Single Carrier Frequency Division Multiple Access (SC-FDMA) and Orthogonal Frequency Division Multiple Access (OFDMA), Space Division Multiple Access (SDMA) and so on.

Wireless communication systems are standardized by the 3rd Generation Partnership Project (3GPP). The 3GPP has developed standards for a fourth generation radio access technology, which is often referred to as the Long-Term Evolution (LTE). The various development stages of the 3GPP specifications are referred to as releases. More recent developments of the LTE are often referred to as LTE Advanced (LTE-A). The LTE (or LTE-A) employs a radio mobile architecture known as the Evolved Universal Terrestrial Radio Access Network (E-UTRAN) and a Core Network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as WLAN and/or Worldwide interoperability for Microwave access (WiMax). A base station can provide coverage for an entire cell or similar radio service area. Core network elements include Mobility Management Entity (MME), Serving Gateway (S-GW) and Packet Gateway (P-GW).

The 3GPP has also developed standards for a fifth-generation radio access technology, which is often referred to as 5G or new radio (NR). A wireless communications system that employs 5G or NR radio access technology is a 5G system (5GS). Base stations of 5GS may be known as next generation Node Bs (gNBs). Changes to the architecture of a 5GS may depend on the need to support various radio access technologies and finer Quality of Service (QoS) support, and some on-demand requirements for QoS levels to support Quality of Experience (QoE) of user point of view. Also network aware services and applications, and service and application aware networks may bring changes to the architecture of the 5GS. Those are related to Information Centric Network (ICN) and User-Centric Content Delivery Network (UC-CDN) approaches. NR may use Multiple Input-Multiple Output (MIMO) antennas, many more base stations or nodes than LTE (a so-called small cell concept), including macro sites operating in co-operation with smaller stations and perhaps also employing a variety of radio access technologies for better coverage and enhanced data rates.

A 5GS utilizes Network Functions Virtualization (NFV) which is a network architecture concept that proposes virtualizing network node functions into "building blocks" or entities that may be operationally connected or linked together to provide services. A Virtualized Network Function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G Core Network (CN) (a CN of a 5GS) comprises functional entities. The CN of a 5GS (5GC) is connected to a UE via the Radio Access Network (RAN). A User Plane Function (UPF) whose role is called PDU Session Anchor (PSA) may be responsible for forwarding frames back and forth between the Data Network (DN) and the tunnels established over the 5G towards the UEs exchanging traffic with the DN.

The UPF is controlled by a Session Management Function (SMF) that receives policies from a Policy Control Function (PCF). The 5GC may also include an Access and Mobility Function (AMF) is configured to handle connection and mobility tasks for a 5GC.

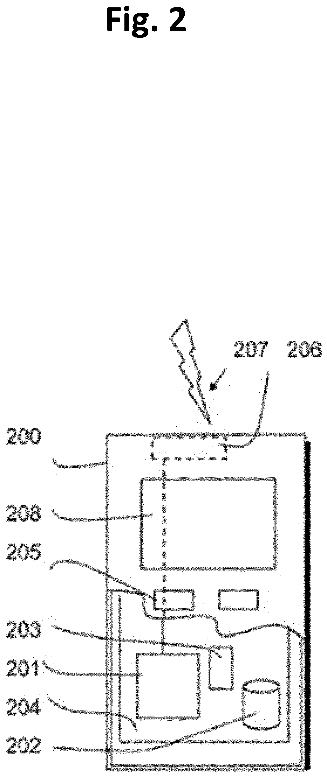

A possible wireless communication device 200 will now be described in more detail with reference to FIG. 2 showing a schematic, partially sectioned view. Such a communication device 200 is often referred to as User Equipment (UE), user device or terminal device. An appropriate mobile communication device 200 may be provided by any device capable of sending and receiving radio signals. Non-limiting examples of a communication device 200 comprise a Mobile Station (MS,) a mobile phone or what is known as a smart phone, a computer provided with a wireless interface card or other wireless interface facility (e.g., USB dongle), Personal Data Assistant (PDA), a sensor, or a tablet provided with wireless communication capabilities,. The communication device 200 may provide, for example, communication of data or communications carrying voice, electronic mail (e-mail), text message, multimedia and so on. Users may thus be offered and provided numerous services via their communication devices. Non-limiting examples of these services comprise two-way or multi-way calls, data communication or multimedia services or simply an access to a data communications network system, such as the Internet. Communication devices may also be provided broadcast or multicast data. Non-limiting examples of broadcast or multicast data comprise data of a download, a television program, a radio program, a video, an advertisement, an alert and other data.

In an industrial application a communication device 200 may be a modem integrated into an industrial actuator (e.g., a robot arm) and/or a modem acting as an Ethernet-hub that will act as a connection point for one or several connected Ethernet devices (which connection may be wired or unwired).

The communication device 200 is typically provided with at least one data processing entity 201, at least one memory 202 and other possible components 203 for use in software and hardware aided execution of tasks it is designed to perform, including control of access to and communications with a station of an access nodes (e.g., a base station of a RAN or an access point of a Wi-Fi network) and other communication devices. The data processing, storage and other relevant control apparatus can be provided on an appropriate circuit board and/or in chipsets 204. The user may control the operation of the communication device 200 by means of a suitable user interface such as keypad 205, voice commands, touch sensitive screen or pad, combinations thereof or the like. A display 208, a speaker and a microphone can be also provided. Furthermore, the communication device 200 may comprise appropriate connectors (either wired or wireless) to other devices and/or for connecting external accessories, for example hands-free equipment, thereto.

The communication device 200 may receive signals over an air or radio interface 207 via appropriate apparatus for receiving and may transmit signals via appropriate apparatus for transmitting radio signals. In FIG. 2, transceiver apparatus is designated schematically by block 206. The transceiver apparatus 206 may be provided for example by means of a radio part and associated antenna arrangement. The antenna arrangement may be arranged internally or externally to the communication device 200.

The communication device 200 may also or alternatively be configured to communicate using one or more Global Navigational Satellite Systems (GNSS such as GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Generally, the communication device 200 illustrated in FIG. 2 includes a set of components configured to perform core functions. For example, this set of components may be implemented as a system on chip (SoC), which may include portions for various purposes. Alternatively, this set of components may be implemented as separate components or groups of components for the various purposes. The set of components may be (communicatively) coupled (e.g., directly or indirectly) to various other circuits of the communication device 200.

The communication device 200 may include at least one antenna in communication with a transmitter and a receiver (e.g., the transceiver apparatus 206). Alternatively, transmit and receive antennas may be separate. The communication device 200 may also include a processor (e.g., the at least one data processing entity 201) configured to provide signals to and receive signals from the transmitter and receiver, respectively, and to control the functioning of the communication device 200. The processor may be configured to control the functioning of the transmitter and receiver by effecting control signaling via electrical leads to the transmitter and receiver. Likewise, the processor may be configured to control other elements of the communication device 200 by effecting control signaling via electrical leads connecting processor to the other elements, such as a display (e.g., display 208) or a memory (e.g., the at least one memory 202). The processor may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an Application Specific Integrated Circuit (ASIC), a Field Programmable Gate Array (FPGA), and/or the like, or some combination thereof. Accordingly, in some examples, the processor may comprise a plurality of processors or processing cores.

The communication device 200 may be capable of operating with one or more air interface standards, communication protocols, modulation types, access types, and/or the like. Signals sent and received by the processor may include signaling information in accordance with an air interface standard of an applicable cellular system, and/or any number of different wireline or wireless networking techniques, comprising but not limited to Wi-Fi, WLAN techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the communication device 200 and/or a cellular modem therein may be capable of operating in accordance with various communication protocols of 3rd Generation (3G) , 4th generation (4G), 5^{th} Generation (5G) radio access technologies, Internet Protocol Multimedia Subsystem (IMS) communication protocols such as, for example, Session Initiation Protocol (SIP) and/or the like..

It is understood that the processor may include circuitry for implementing audio/video and logic functions of the communication device 200. For example, the processor may comprise a digital signal processor device, a microprocessor device, an analog-to-digital converter, a digital-to-analog converter, and/or the like. Control and signal processing functions of the communication device 200 may be allocated between these devices according to their respective capabilities. The processor may additionally comprise an internal voice coder, an internal data modem, and/or the like. Further, the processor may include functionality to operate one or more software programs, which may be stored in memory. In general, the processor and software instructions stored in the memory of the communication device 200 may be configured to cause the communication device 200 to perform various actions. For example, the processor may be capable of operating a connectivity program, such as a web browser. The connectivity program may allow the communication device 200 to transmit and receive web content, such as location-based content, according to a protocol, such as Wireless Application Protocol (WAP), HyperText Transfer Protocol (HTTP), and/or the like.

The communication device 200 may also comprise a user interface including, for example, an earphone or speaker, a ringer, a microphone, a display, a user input interface, and/or the like, which may be operationally coupled to the processor. The display may, as noted above, include a touch sensitive display, where a user may touch and/or gesture to make selections, enter values, and/or the like. The processor may also include user interface circuitry configured to control at least some functions of one or more elements of the user interface, such as the speaker, the ringer, the microphone, the display, and/or the like. The processor and/or user interface circuitry comprising the processor may be configured to control one or more functions of one or more elements of the user interface through computer program instructions, for example, software and/or firmware, stored on a memory accessible to the processor, for example, volatile memory, non-volatile memory, and/or the like. The communication device 200 may include a battery for powering various circuits related to the mobile terminal, for example, a circuit to provide mechanical vibration as a detectable output. The user input interface may comprise devices allowing the communication device 200 to receive data, such as a keypad (e.g., keypad 206) and/or other input devices. The keypad can also be a virtual keyboard presented on display or an externally coupled keyboard.

The communication device 200 may also include one or more mechanisms for sharing and/or obtaining data. For example, the communication device 200 may include a short-range radio frequency (RF) transceiver and/or interrogator, so data may be shared with and/or obtained from electronic devices in accordance with RF techniques. The communication device 200 may include other short-range transceivers, such as an infrared (IR) transceiver, a Bluetooth^{™} (BT) transceiver operating using Bluetooth^{™} wireless technology, a wireless Universal Serial Bus (USB) transceiver, a Bluetooth^{™} Low Energy transceiver, a ZigBee transceiver, an ANT transceiver, a cellular device-to-device transceiver, a wireless local area link transceiver, and/or any other short-range radio technology. The communication device 200 and more specifically, the short-range transceiver may be capable of transmitting data to and/or receiving data from electronic devices within the proximity of the apparatus, such as within 10 meters, for example. The communication device 200 including the Wi-Fi or WLAN modem may also be capable of transmitting and/or receiving data from electronic devices according to various wireless networking techniques, including 6LoWPAN, Wi-Fi, Wi-Fi low power, WLAN techniques such as IEEE 802.11 techniques, IEEE 802.15 techniques, IEEE 802.16 techniques, and/or the like.

The communication device 200 may comprise one or more Subscriber Identity Modules (SIM), one or more Universal Subscriber Identity Modules (USIM), one or more removable User Identity Modules (R-UIM), one or more Embedded Universal Integrated Circuit Cards (eUICCs), one or more Universal Integrated Circuit Cards (UICC), and/or the like, which may store information elements related to a mobile subscriber. In addition, the communication device 200 may include other removable and/or fixed memory. The communication device 200 may include volatile memory and/or non-volatile memory. For example, the volatile memory may include Random Access Memory (RAM) including dynamic and/or static RAM, on-chip or off-chip cache memory, and/or the like. The non-volatile memory, which may be embedded and/or removable, may include, for example, read-only memory, flash memory, magnetic storage devices, for example, hard disks, floppy disk drives, magnetic tape, optical disc drives and/or media, non-volatile random-access memory (NVRAM), and/or the like. Like volatile memory, the non-volatile memory may include a cache area for temporary storage of data. At least part of the volatile and/or non-volatile memory may be embedded in the processor. The non-volatile memory may store one or more software programs, instructions, pieces of information, data, and/or the like which may be used by the apparatus for performing operations disclosed herein.

The non-volatile memory may store an identifier, such as an International Mobile Equipment Identification (IMEI) code, capable of uniquely identifying the communication device 200. In the example embodiment, the processor may be configured using computer code stored at memory to cause the processor to perform operations disclosed herein.

Some of the embodiments disclosed herein may be implemented in software, hardware, application logic, or a combination of software, hardware, and application logic. The software, application logic, and/or hardware may reside on the memory, the processor, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 2, computer-readable medium may comprise a non-transitory computer-readable storage medium that may be any media that can contain or store the instructions for use by or in connection with an instruction execution system, apparatus, or device, such as a computer.

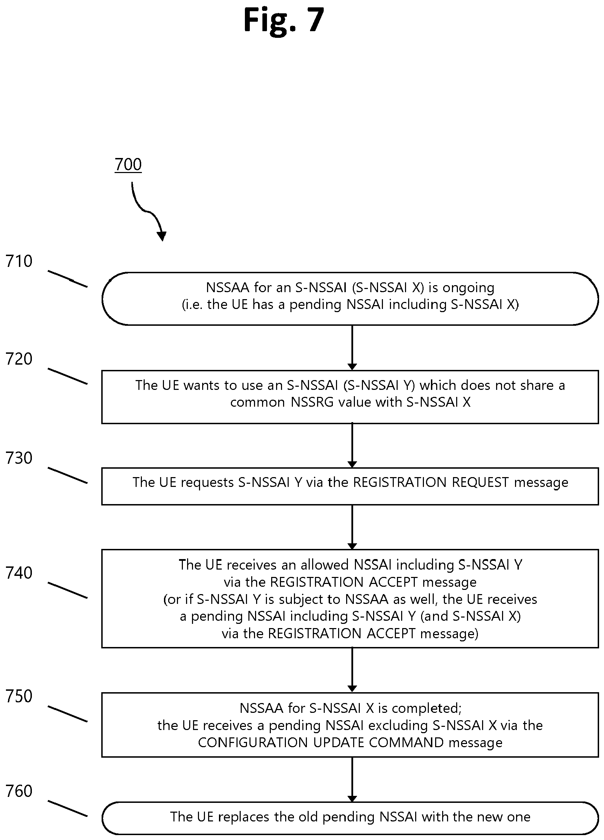

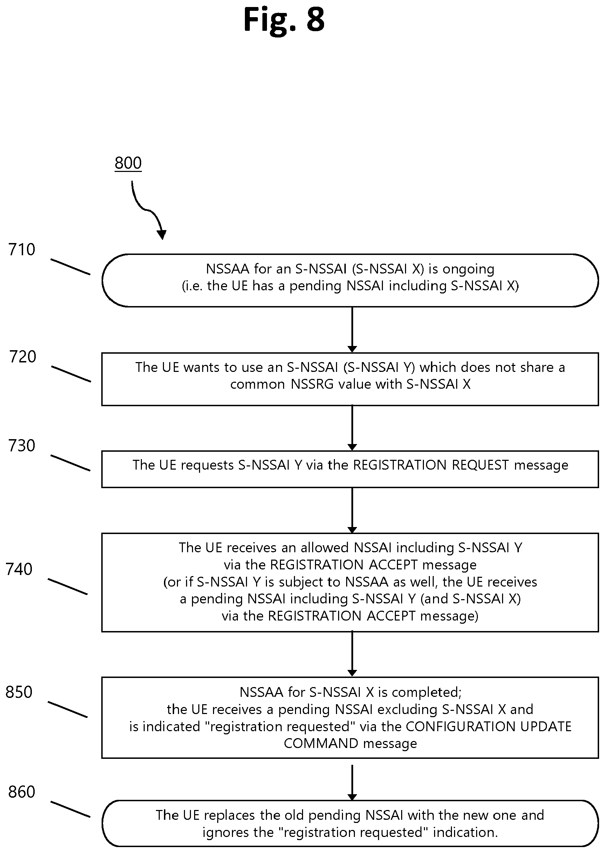

In some embodiments, the communication device 200 (i.e., UE or a user device in a network) comprises the processor (e.g., the at least one data processing entity 201) and the memory (e.g., the at least one memory 202). The memory includes computer program code causing the communication device 200 to perform processing according to the methods described herein, e.g., with reference to FIGs. 7 and 8.

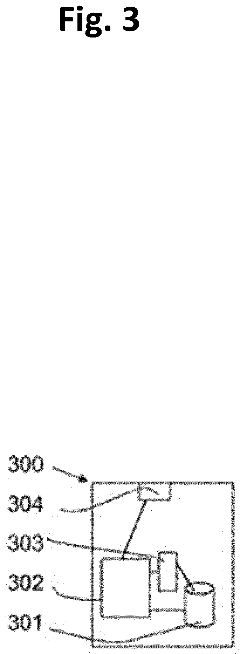

FIG. 3 shows an example embodiment of a control apparatus for a wireless communication system, for example to be coupled to and/or for controlling an apparatus such as a station of an access network, such as a base station or RAN node of a RAN (e.g., eNB or gNB), a relay node, a core network node such as an MME or S-GW or P-GW, a network node comprising core network functions such as an AMF or a SMF, a server or host. The control apparatus 300 may be integrated with or external to the apparatus. In other embodiments, the control apparatus 300 can be another network element such as an RNC or a spectrum controller. In some embodiments, the control apparatus 300 can be arranged to control communications in the service area of the wireless communication system. The control apparatus 300 comprises at least one memory 301, at least one data processing unit 302, 303 and an input/output interface 304. Via the input/output interface 304 the control apparatus 300 can be coupled to a receiver and a transmitter of a base station. The receiver and/or the transmitter of the base station may be implemented as a radio front end or a remote radio head.

Generally, the receiver and/or the transmitter of the base station has at least one antenna, which transmits and receives radio signals. A radio frequency (RF) transceiver module, coupled with the at least one antenna, receives RF signals from the at least one antenna, converts them to baseband signals and sends them to processor (e.g., the at least one data processing unit 302, 303). RF transceiver also converts received baseband signals from processor, converts them to RF signals, and sends out to antenna. A processor processes the received baseband signals and invokes different functional modules to perform features in control apparatus 300. Memory (e.g., the at least one memory 301) stores program instructions and data to control the operations of the control apparatus 300. In some embodiments, the control apparatus 300 includes a protocol stack and a set of control functional modules and circuits. A PDU session handling circuit handles PDU session establishment and modification procedures. A policy control functional module configures policy rules for UEs. A configuration and control circuit provides different parameters to configure and control UEs of related functionalities including mobility management and session management. Suitable processors include, by way of example, a special purpose processor, a digital signal processor (DSP), a plurality of micro-processors, one or more micro-processor associated with a DSP core, a controller, a microcontroller, ASICs, FPGA circuits, and other type of integrated circuits (ICs), and/or state machines.

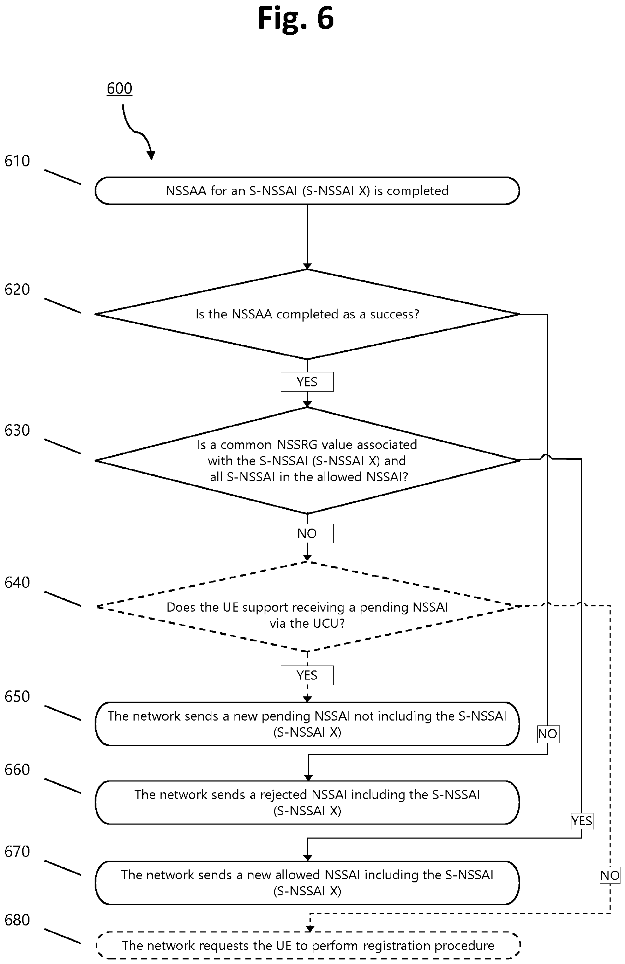

In some embodiments, the control apparatus 300 may be a base station, a wireless transmitting and/or receiving point, or a network node comprises the processor (e.g., the at least one data processing unit 302, 303) and the memory (e.g., the at least one memory 301). The memory includes computer program code causing the control apparatus 300 to perform processing according to the methods described herein, e.g., with reference to FIG. 6.

Before referring to FIGS. 6 to 8 and describing methods for updating a user equipment according to some embodiments of the subject disclosure, some background information and aspects related to the subject disclosure will be provided.

For example, the subject disclosure may be incorporated in a network, such as a Public Land Mobile Network (PLMN) or a Standalone Non-Public Network (SNPN), that implements network slicing. Network slicing is a concept where network resources of an end-to-end connection between a user device or user equipment (i.e., UE) and another endpoint in a network such as a network function, network entity or network node in a PLMN or SNPN are sliced. A network slice may be understood as a logical end-to-end network that can be dynamically created and/or modified. The network(s) (e.g., a RAN and a CN) between the end devices may all be sliced from one end device to the other end device, thus forming network slices (i.e., logical end-to-end networks) within the network(s). User devices may access a network slice over a radio interface. As described e.g. in 3GPP TS 38.300 (e.g., version 16.8.0 Release 16, 2022-01), network slicing will be a key feature in 5G to support different services using the same underlying network infrastructure.

A network slice may serve a particular type of service ("service type"). So far, a network slice may serve one of three different service types: eMBB (network slice suitable for the handling of 5G enhanced Mobile Broadband), URLLC (network slice suitable for the handling of Ultra-Reliable Low Latency Communication) and MIoT (network slice suitable for the handling of massive Internet of Things). Communications Service Providers (CSPs) are able to define additional service types that a network slice may serve if needed. A given user device (i.e., UE) may access multiple network slices over the same access network (over the same radio interface, for example).

Thus, network slicing enables a communications service provider to provide dedicated virtual or logical networks (i.e., network slices) using a common network infrastructure. The dedicated virtual or logical networks may provide different networking characteristics such as different Quality of Service (QoS) capabilities in order to provide services with diverse requirements and Service Level Agreements (SLAs). For example, the virtual or logical networks may be customized to meet specific needs of various applications, services, devices, customers and/or operators of the network (e.g., the PLMN or SNPN). Thus, network slicing enables provisioning of different services to an end device (e.g., a UE). In an example, network slices may differ either in the service requirements for the service served by the network slice or the tenant that provides those services.

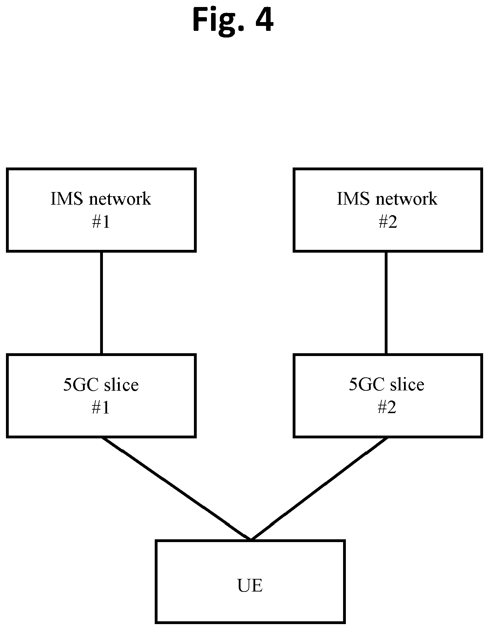

An illustration of a scenario in which a user device (i.e., UE) uses two different services provided by two different networks (e.g., IMS networks) is in FIG. 4. In this scenario, the UE is connected through two different network slices (e.g., 5GC network slices) to the two different IMS networks. That is, the UE is connected through a first network slice (5GC slice #1 to the first IMS network (IMS network #1) and uses a service provided by the first IMS network (IMS network #1), such as a Rich Communication Service (RCS). The UE is also connected through a second network slice (5GC slice #2) to a second IMS network (IMS network #2) and uses a service provided by the second IMS network (IMS network #2) such as Voice over NR (VoNR).

A network slice is uniquely identified via the Single-Network Slice Selection Assistance Information (S-NSSAI). Current 3GPP specifications allow a user device to be simultaneously connected and served by at most eight network slices corresponding to eight S-NSSAIs. Each cell in a 5GS may support tens or even hundreds of S-NSSAIs. In current 3GPP specifications, a Tracking Area (TA) can have a support up to 1024 network slices.

The format of the S-NSSAI may include both Slice Service Type (SST) and Slice Differentiator (SD) fields with a total length of 32 bits or include only SST field part in which case the length of S-NSSAI is 8 bits only. The SST field may have standardized and non-standardized values. Values 0 to 127 belong to the standardized SST range. For instance, SST value of 1 may indicate that the slice is suitable for handling of 5G eMBB, 2 for handling of URLLC, etc. SD is operator-defined only.

Another concept that may be implement in a network (e.g., a PLMN or SNPN) that incorporates the subject disclosure concerns defining a Tracking Area (TA) and a Registration Area (RA). The TA is a logical concept of an area where a user device (i.e., a UE) can move around without updating a MME and is the LTE, EPS or 5GS counterpart of the location area and routing area of GSM, WCDMA and GPRS. The TA consists of a set of cells. TAs can be grouped into lists of tracking areas (TA lists), which can be configured on the UE. For example, the network (e.g., a PLMN or SNPN) allocates a list with one or more TAs to the user. In certain operations, the UE may move freely in all TAs of the list without updating the MME. The RA is a list consisting of TAs, which is configured to the UE by the network (e.g., a PLMN or SNPN). The RA are used to track the UE for paging purposes. If the UE leaves the RA, the UE will let the network know through Non-Access Stratum (NAS) registration request (referred to as mobility registration update) such that the correct RA can be configured to the UE.

In 5G, the RA also has the role to maintain allowed network slices (alternatively allowed NSSAI) of the UE. The allowed NSSAI is configured to the UE by the network (e.g., a PLMN or SNPN). Throughout the subject disclosure, an allowed S-NSSAI can refer to an S-NSSAI included in the allowed NSSAI. The UE NAS can request access to an S-NSSAI and the network (e.g., a PLMN or SNPN) would decide whether to add that S-NSSAI to the UE's list or not.

In addition to the registration procedure, an S-NSSAI may be subject to an authentication and authorization procedure, e.g., a Network Slice-Specific Authentication and Authorization (NSSAA) procedure. Thus, the registration procedure and the NSSAA procedure are two independent procedures. If the UE supports performing a NSSAA procedure and if the UE requests any of these S-NSSAIs that are subject to NSAA, they are included in the list of Pending NSSAI. If the NSSAA procedure is completed as a success, i.e., is successfully completed, the S-NSSAIs are included in the Allowed NSSAI. Otherwise, the S-NSSAIs are included in the Rejected NSSAI. More details regarding the Network Slice-Specific Authentication and Authorization are provided in Section 5.15.10 in 3GPP TS 23.501.

In particular, not all available S-NSSAIs may be compatible to with each other. Therefore, the subscription information for a UE for each S-NSSAI may include information, e.g., Network Slice Simultaneous Registration Group (NSSRG) information, that restricts which S-NSSAIs can be provided to the UE in the Allowed NSSAI simultaneously. Thus, when NSSRG information are associated with S-NSSAIs, the all S-NSSAIs in the allowed NSSAI are supposed to share at least one common NSSRG, in particular at least one NSSRG value. More details regarding the support of subscription-based restrictions to simultaneous registration of network slices are provided in Section 5.15.12 in 3GPP TS 23.501.

It is important to note, that the terms NSSAA, NSSRG, S-NSSAI as well as allowed, pending, requested and rejected NSSAI as used herein are not limited to 5G, but shall represent comparable and analogous concepts implemented in former and future standards, i.e., up to 5G and beyond.

In view of these, and also other, concepts implemented in 5G and beyond, a concept regarding managing requests to register to multiple network slices that are subject to restrictions regarding simultaneous network-slice registration is discussed.

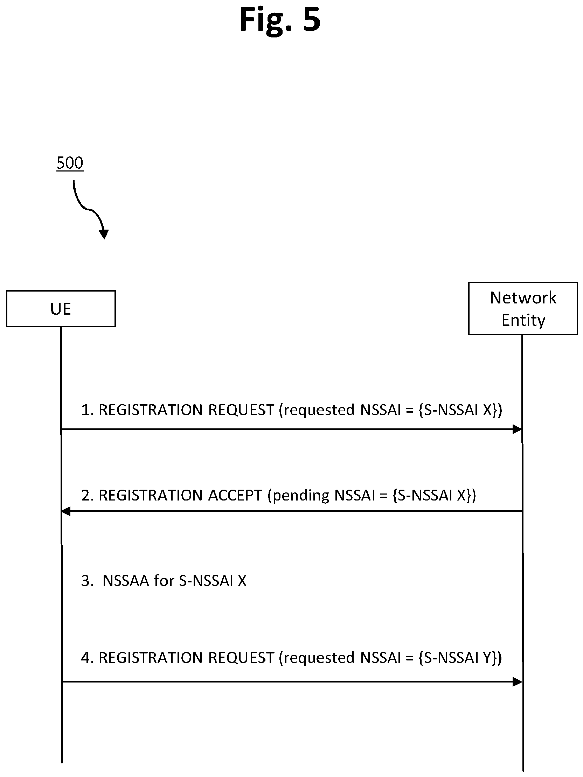

Fig. 5 illustrates an example of a sequence of operations performed when a UE requests one or more network slices of a network. The network may be a PLMN or a SNPN. In the example illustrated in Fig. 5, it is assumed that the following information is configured in the UE. At least S-NSSAI X and S-NSSAI Y are configured in the UE, i.e. the group of configured NSSAI (configured NSSAI) comprises S-NSSAI X and Y (configured NSSAI = {S-NSSAI X, S-NSSAI Y, ...}). In addition, S-NSSAI X belongs to NSSRG A and is subject to NSSAA. S-NSSAI Y, on the other hand, belongs to NSSRG B and may or may not be subject to NSSAA, i.e. it does not matter in this scenario.

At 1, the UE triggers a registration procedure. While performing a registration procedure, the UE decides to request S-NSSAI X (i.e., a network slice of the network identified by S-NSSAI X) and therefore sends, to the network, a message (called registration request, sometimes referred to as REGISTRATION REQUEST) comprising a requested NSSAI. The requested NSSAI comprises S-NSSAI X.

At 2, the network (e.g. the AMF of the network), receives the registration request from the UE and accepts the UE's registration request (e.g. by registering the UE in the network). Since the S-NSSAI X requested by the UE is subject to a NSSAA procedure and a NSSAA procedure for the S-NSSAI X has not yet been performed, the S-NSSAI X is included in a pending NSSAI.

At 3, the NSSAA procedure is performed for S-NSSAI X between the UE and the network.

In this scenario, the UE may decide to request registration to S-NSSAI Y (i.e., another network slice of the network identified by S-NSSAI Y) while the NSSAA procedure for S-NSSAI X is still in progress or at least before S-NSSAI X is added to the allowed NSSAI, i.e. the group of allowed S-NSSAIs. As mentioned above, S-NSSAI X and S-NSSAI Y are incompatible because they have different NSSRG values assigned to them, namely NSSRG A and NSSRG B. Thus, if the UE is allowed to request S-NSSAI Y at 4, this results in S-NSSAI Y being added to the allowed NSSAIs even before S-NSSAI X. Due to NSSRG, it would then no longer be possible to add S-NSSAI X to the allowed NSSAI, even though NSSAA was successful for S-NSSAI X. Therefore, if the UE was allowed to request S-NSSAI Y, it would be unclear how the NSSAI for the UE should be updated when a NSSAA procedure for S-NSSAI X has been successfully completed (i.e., is completed as a success).

However, prohibiting the UE from requesting registration with S-NSSAI Y would result in applications in the UE running on a sub-optimal network slice, i.e., the network slice identified by S-NSSAI X.

Consequently, an approach to update the UE in the above scenario when a NSSAA procedure for S-NSSAI X has been successfully completed (i.e., has completed as a success) is required.

Now, the methods for update a user equipment in a network (e.g., a PLMN or a SNPN) according to some embodiments of the subject disclosure will be described.

According to an example of the method to update a user equipment (UE) configuration of a UE the UE sends a request for registration to a first network slice of a network (e.g., a PLMN or a SNPN). The network indicates to the UE whether the registration request is accepted. If the request is accepted the first network slice is added to a group of pending network slices. If the UE supports NSSAA, an authentication and authorization procedure for the first network slice is performed by the network. In the case that the authentication and authorization procedure is completed successfully it is determined whether the first network slice is compatible with one or more other network slices that are included in a group of allowed network slices or not.

In response to determining that the first network slice is compatible with the group of allowed network slices, the first network slice is added to the group of allowed network slices and the UE is updated to be configured with the new group of allowed network slices that includes the first network slice.

In response to determining that the first network size is not compatible with a group of allowed network slices, the first network slice is removed from the group of pending network slices. The UE is then updated to be configured with the new group of pending network slices that excludes the first network slice. In some examples the UE then replaces any stored group of pending network slices with the new group of pending network slices.

According to some examples of the method, based on priority information associated with the network slices, the priority of the first network slice and the network slices in the group of allowed network slices is determined. If the first network slice has a higher priority than the allowed network slices, the first network slice is included into the group of allowed network slices, even if the first network slice is not compatible with the other allowed network slices. The UE is then updated to be configured with the new group of allowed network slices that includes the first network slice.

According to some further examples of the method, if there is no group of allowed network slices, the procedure is the same as in the examples described above, but with the following differences. The compatibility of the first network slice is determined with respect to a group of recent requested network slices instead of the group of allowed network slices. In addition, in the corresponding cases, the priority of the first network slice is compared with the priority of the network slices of a group of last requested network slices instead of the priority of the allowed network slices.

In some of the above examples, S-NSSAIs may be associated with the network slices and in particular a first S-NSSAI may be associated with the first network slice. In some of the above examples, the network slices may be identified by S-NSSAIs and the first network slice may be identified by a first S-NSSAI. In some of these examples, a group of allowed network slices may be represented by a group of S-NSSAI associated with the allowed network slices, e.g., an allowed NSSAI. Likewise, a group of pending network slices may be represented by a group of S-NSSAI associated with the pending network slices, e.g., a pending NSSAI, a group of requested network slices may be represented by a group of S-NSSAI associated with the requested network slices, e.g., a requested NSSAI, and a group of rejected network slices may be represented by a group of S-NSSAI associated with the rejected network slices, e.g., a rejected NSSAI. Adding a network slice to a group of network slices may then be implemented by adding the S-NSSAI associated with the network slice to the allowed or pending NSSAI. In some of the above examples, the authentication and authorization procedure may be the above described NSSAA procedure and the compatibility of two or more network slices may be indicated by the NSSRG feature and in particular, when the two or more S-NSSAI associated with the network slices share a common NSSRG value. Thus, in some examples of the method, if it is determined that there is at least one common NSSRG value associated with the S-NSSAI and all S-NSSAIs in the existing allowed NSSAI (or, if there is no allowed NSSAI for the UE, all S-NSSAIs in the most recent requested NSSAI for the same access), the network shall include this S-NSSAI in the allowed NSSAI over the same access of the requested S-NSSAI.

If it is determined that there is no common NSSRG value associated with the S-NSSAI and all S-NSSAIs in the existing allowed NSSAI (or, if there is no allowed NSSAI for the UE, all S-NSSAIs in the most recent requested NSSAI for the same access), the network shall remove this S-NSSAI from the pending NSSAI.

In this case, based on the policy of the operator of the network (i.e., the network operator's policy), the network can additionally evaluate whether the S-NSSAI for which NSSAA was successful has higher priority than S-NSSAI(s) in the existing allowed NSSAI (or, if there is no allowed NSSAI for the UE, S-NSSAI(s) in the most recent requested NSSAI for the same access). For example, if the S-NSSAI for which NSSAA was successful has higher priority than S-NSSAIs in the existing allowed NSSAI, the network can send a new allowed NSSAI including the S-NSSAI for which NSSAA was successful (instead of updating the pending NSSAI). If no priority information is available, or the S-NSSAIs are equal priority, then the network, e.g., the AMF, should apply a local policy (e.g. the network may decide to keep the existing allowed S-NSSAI(s) especially if they have PDU sessions).

The allowed NSSAI or the pending NSSAI shall be included in a message sent to the UE (the configuration update command sometimes referred to as CONFIGURATION UPDATE COMMAND) depending on the result of the procedures subject to network slice-specific authentication and authorization. In some examples, after receiving the configuration update command that includes a new pending NSSAI from the network, during a procedure to update a UE configuration of a UE, the UE replaces any stored pending NSSAI for the network with the new pending NSSAI.

In some examples of the method and of the user equipment, the UE can indicate, during a registration procedure, whether it supports receiving a pending NSSAI via the configuration update command. If the UE indicates it supports receiving a pending NSSAI via the configuration update command, the network performs the actions or operations for updating the UE as described in case of the S-NSSAI whose NSSAA was successfully completed is incompatible with the allowed S-NSSA.

Otherwise if the UE does indicate, during registration, that it does not support receiving a pending NSSAI via the configuration update command (or, in some examples, if the UE does not indicate, during registration, that it does support receiving a pending NSSAI via the configuration update command), and if NSSAA for an S-NSSAI is successfully completed (i.e., is completed as a success) and there is no common NSSRG value associated with the S-NSSAI and all S-NSSAIs in the existing allowed NSSAI (or, if there is no allowed NSSAI for the UE, all S-NSSAIs in the most recent requested NSSAI for the same access), the core network sends a configuration update command that includes an indication that the UE is to perform registration with the network, in particular the core network. The indication that the UE is to perform registration can be the "registration requested" in the registration requested bit of a configuration update indication information element (IE) in the configuration update command. In this case, based on the policy of a network operator (i.e., a network operator's policy), the network can additionally evaluate whether the S-NSSAI for which NSSAA was successfully completed has higher priority than S-NSSAI(s) in the existing allowed NSSAI (or, if there is no allowed NSSAI for the UE, S-NSSAI(s) in the most recent requested NSSAI for the same access). For example, if the S-NSSAI for which NSSAA was successfully competed has higher priority than S-NSSAIs in the existing allowed NSSAI, the core network can send a new allowed NSSAI including the S-NSSAI for which NSSAA was successfully completed (instead of requesting the UE perform registration).

FIG. 6 illustrates a flow chart of a method 600 for updating a user equipment according to some embodiments. For example, the UE may be represented by any of the mobile communication devices 102, 104, 105 of the wireless communication system 100 as described above with reference to FIG. 1, or the communication device 200 as described above with reference to FIG. 2. The method 600 is performed on by a network (e.g., a PLMN or a SNPN), or by a network entity of the network. The network entity may, for example, be a network node. Examples of the network node include any network node that includes one or more network functions of a PLMN or a SNPN. The network node may include an Access and Mobility management Function (AMF) and the method 600 may be performed by such a network node.

It is assumed that the UE has requested registration with S-NSSAI X, e.g. in a registration request (sometimes also referred to as registration request message). It is further assumed that the UE received from the network a request accept message. The request accept message may comprise the pending NSSAI including S-NSSAI X. It is further assumed that NSSAA for S-NSSAI X was initiated. At step 610, NSSAA for an S-NSSAI, e.g., S-NSSAI X, is completed at the network, e.g., by the AMF.

At step 620, it is determined whether the NSSAA is completed successfully, i.e., is completed as a success.

If the NSSAA is not successfully completed, at step 660, the network sends a group of rejected S-NSSAI (rejected NSSAI) including S-NSSAI X to the UE.

If the NSSAA is successfully completed, at step 630, it is determined whether there is a common NSSRG value associated with the S-NSSAI (S-NSSAI X) and all S-NSSAI in the allowed NSSAI. In one example, based on information provided by the UE validated by the Authentication, Authorization and Accounting (AAA) server for the S-NSSAI with the intermediation of a Network Slice-Specific Authentication and Authorization Function (NSSAAF), the core network of a PLMN or a SNPN (e.g., the AMF) determines whether there is at least one common NSSRG value associated with S-NSSAI X and all S-NSSAIs in the existing allowed NSSAI.

If it is determined, e.g. by the core network, that there is at least one common NSSRG value associated with the S-NSSAI and all S-NSSAIs in the existing allowed NSSAI, the network sends in step 670 a new allowed NSSAI including S-NSSAI X to the UE. In some examples, the new allowed NSSAI may be included in a configuration update command sent by the network to the UE. E.g., a PLMN or a SNPN (i.e., the AMF of the network) performs a procedure to update information configured in a UE, i.e. the UE configuration. The procedure to update the UE configuration of a UE comprises the core network sending a configuration update command that includes a new allowed NSSAI which includes the S-NSSAI.

If it is determined, e.g., by the network, that there is no common NSSRG value associated with the S-NSSAI and all S-NSSAIs in the existing allowed NSSAI, the network sends in step 650 a new pending NSSAI not including S-NSSAI X to the UE. In some examples, the new pending NSSAI may be included in a configuration update command sent by the network to the UE. E.g., the core network may perform a procedure to the UE configuration of a UE. The procedure to update the UE configuration of a UE comprises the network sending a configuration update command that includes a new pending NSSAI excluding the S-NSSAI.

In some examples, after receiving the configuration update command that includes a new pending NSSAI from the network during the procedure to update the UE configuration of the UE, the UE replaces any stored pending NSSAI for the core network with the new pending NSSAI.

In some examples, an optional step 640 is performed, after it is determined in step 630 that there is no common NSSRG value associated with the S-NSSAI and all S-NSSAIs in the existing allowed NSSAI. In step 640, it is determined whether the UE supports receiving a pending NSSAI in a UE Configuration Update Procedure (UCU). If the UE supports receiving a pending NSSAI in a UCU, at step 650, the network sends a new pending NSSAI that includes S-NSSAI X. If the UE does not support receiving a pending NSSAI in a UCU, at the optional step 680, the network requests the UE to perform the registration procedure, e.g., via setting the registration requested bit of the configuration update IE to a value which indicates "registration requested" (i.e, a value which indicates that the UE is to request registration to the network). However, in some of these examples, in step 640, additionally the priority of S-NSSAI X and all S-NSSAI in the allowed NSSAI is determined (not shown in Fig. 6). If the priority of the S-NSSAI is higher than the priorities of all S-NSSAI in the allowed NSSAI, S-NSSAI X the network sends a new allowed NSSAI including S-NSSAI X instead of the indication to request registration.

In some examples, the optional step 640 is not performed, i.e., the network does not know whether the UE supports receiving a pending NSSAI via the UCU. In these examples, in step 650 the network sends a new pending NSSAI not including the S-NSSAI (S-NSSAI X) as well as an indication that the UE is to perform a registration request procedure. In some of these examples, both are included in the configuration update command. A UE that does not support receiving a pending NSSAI, e.g., a legacy UE, will not understand the pending NSSAI however the indication to request registration and, consequently, perform the registration request procedure. However, a UE that supports receiving pending NSSAI, e.g., via the UCU, will understand both, the pending NSSAI in the configuration update command and the indication to request registration. Since the UE can update the pending NSSAI directly via the UCU, there is no need to perform the registration procedure. Thus, the UE can just ignore the network's request to perform a registration procedure.

FIG. 7 illustrates a flow chart of a method 700 for updating a user equipment according to some embodiment performed by the UE. Again, it is assumed that the UE has requested registration with S-NSSAI X. It is further assumed that the UE received from the network (e.g., the PLMN or the SNPN) a request accept message. The request accept message comprises the pending NSSAI including S-NSSAI X. It is further assumed that NSSAA for S-NSSAI X is already initiated.

At step 710, the NSSAA for S-NSSAI X is ongoing. Thus, the UE received e.g., in a request accept message sent by the network, a pending NSSAI comprising S-NSSAI X.

At step 720, the UE intends to use an S-NSSAI (S-NSSAI Y) which does not share a common NSSRG value with S-NSSAI X, i.e. S-NSSAI X and Y are incompatible. An example for a trigger for the UE intending to use S-NSSAI Y may be that an application running on the UE requires S-NSSAI Y for optimal performance.

At step 730, the UE requests S-NSSAI Y via the registration request message. In some examples, the registration request message comprises S-NSSAI Y, e.g., included in a group of requested S-NSSAI (requested NSSAI).

At step 740, the UE receives an allowed NSSAI including S-NSSAI Y via the registration accept message (sometimes referred to as REGISTRATION ACCEPT [message]) sent by the network. Alternatively, if S-NSSAI Y is subject to NSSAA as well, the UE receives a pending NSSAI including S-NSSAI Y (and S-NSSAI X) via the registration accept message sent by the network. In some examples, the registration accept message may comprise the allowed NSSAI, the pending NSSAI or both.

At step 750, NSSAA for S-NSSAI X is completed and the UE receives a new pending NSSAI excluding S-NSSAI X via the configuration update command message sent by the network). In some examples, the new pending NSSAI may be included in the configuration update command message sent by the network.

At step 760, the UE replaces all stored pending NSSAI with the new pending NSSAI.

FIG. 8 illustrates a flow chart of a method 800 for updating a user equipment according to some embodiment performed by the UE. It is assumed that the network (e.g., the PLMN or the SNPN) did not determine, whether the UE supports receiving pending NSSAI as described above in the context of Fig. 6 and in particular the examples where step 640 is not performed and the network sends in step 650 both, a new pending NSSAI not including the S-NSSAI (S-NSSAI X) as well as an indication that the UE is to perform a registration request procedure. Steps 710 to 740 are identical as in method 700 illustrated in Fig. 7. However, in step 850, the UE receives a pending NSSAI excluding S-NSSAI X and an indication to request registration. The indication to request registration may be a bit in the configuration update information element (IE). The bit indicates whether the UE is to request registration or not. For example, the bit may indicate the configuration update IE may be registration requested bit which is set to a value which indicates that the UE is to request registration. The UE understands both, the pending NSSAI and the indication to request registration. Since the UE can update the pending NSSAI directly via the UCU, there is no need to perform a registration procedure. Thus, in step 860, the UE replaces the old pending NSSAI with the new pending NSSAI and ignores the indication to request registration.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless communication systems, networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of the subject disclosure as defined in the appended claims. Indeed, there is a further embodiment comprising a combination of one or more embodiments with any of the other embodiments previously discussed.

## Claims

1. A method to update a user equipment configuration of a user equipment which has requested a network slice when registering to a network, the method comprising,
after a network slice-specific authentication and authorization procedure for a first single network slice selection assistance information associated with the requested network slice is successfully completed, sending to the user equipment a configuration update command to update a user equipment configuration of the user equipment, based on
a determination that no common network slice simultaneous registration group value is associated with the first single network slice selection assistance information and all single network slice selection assistance information in an allowed NSSAI for the user equipment,
the configuration update command comprising a new pending NSSAI for the user equipment, the pending NSSAI excluding the first single network slice selection assistance information.

2. The method according to claim 1, comprising
after a network slice-specific authentication and authorization procedure for a first single network slice selection assistance information associated with the requested network slice is successfully completed, sending a configuration update command to the user equipment to update the user equipment configuration of the user equipment, based on
a determination that at least one common network slice simultaneous registration group value is associated with the first single network slice selection assistance information and all single network slice selection assistance information in the allowed NSSAI,
the configuration update command comprising a new allowed NSSAI including the first single network slice selection assistance information.

3. The method according to any one of claims 1 or 2, comprising
after a network slice-specific authentication and authorization procedure for a first single network slice selection assistance information associated with the requested network slice is successfully completed, sending the configuration update command to the user equipment to update the user equipment configuration of the user equipment, based on
a determination that no common network slice simultaneous registration group value is associated with the first single network slice selection assistance information and all single network slice selection assistance information in the allowed NSSAI for the user equipment, and
a determination that the first single network slice selection assistance information has a higher priority than all single network slice selection assistance information in the allowed NSSAI for the user equipment,
the configuration update command comprising a new allowed NSSAI instead of the new pending NSSAI for the user equipment, the new allowed NSSAI including the first single network slice selection assistance information.

4. The method according to any one of claims 1 to 3, comprising, if the allowed NSSAI for the user equipment does not exist, the step of sending of the configuration update command to the user equipment to update the user equipment configuration of the user equipment,
as in claim 1 is based on
a determination that no common network slice simultaneous registration group value is associated with the first single network slice selection assistance information and all single network slice selection assistance information in the most recent requested NSSAI;
as in claim 2 is based on
a determination that at least one common network slice simultaneous registration group value is associated with the first single network slice selection assistance information and all single network slice selection assistance information in the most recent requested NSSAI;
and as in claim 3 is based on
a determination that no common network slice simultaneous registration group value is associated with the first single network slice selection assistance information and all single network slice selection assistance information in the most recent requested NSSAI, and
a determination that the first single network slice selection assistance information has a higher priority than all single network slice selection assistance information in the most recent requested NSSAI.

5. A user equipment, comprising
transmitting means being adapted to send a registration request message to register with one or more network slices of a network;
receiving means being adapted
to receive a registration accept message sent by the network, the registration accept message comprising a first pending NSSAI including at least one of one or more single network slice selection assistance information associated with the one or more network slices, and
to receive a configuration update command sent by network, the configuration update command comprising a second pending NSSAI; and
executing means being adapted to replace the first pending NSSAI with the second pending NSSAI.

6. The user equipment according to claim 5, wherein the transmitting means is configured to include in the registration request message an indication that the user equipment supports receiving a pending NSSAI via the configuration update command.

7. The user equipment according to any one of claims 5 or 6, wherein the user equipment configuration comprises a parameter indicating whether the user equipment can request a single network slice selection assistance information not sharing a common network slice simultaneous registration group value with any single network slice selection assistance information in the stored or received pending NSSAI.

8. A network entity in a network, the network entity comprising
receiving means adapted to receive a registration request message sent by a user equipment to register with a network slice of the network;
transmitting means adapted to send a configuration update command to the user equipment; and
executing means being adapted to
after a network slice-specific authentication and authorization procedure for a first single network slice selection assistance information associated with the requested network slice is successfully completed, send to a user equipment a configuration update command to update a user equipment configuration of the user equipment, based on
a determination that no common network slice simultaneous registration group value is associated with the first single network slice selection assistance information and all single network slice selection assistance information in an allowed NSSAI for the user equipment,
the configuration update command comprising a new pending NSSAI for the user equipment, the pending NSSAI excluding the first single network slice selection assistance information.

9. The network entity according to claim 8, wherein the executing means are further adapted to,
after a network slice-specific authentication and authorization procedure for a first single network slice selection assistance information associated with the requested network slice is successfully completed, send a configuration update command to the user equipment to update the user equipment configuration of the user equipment, based on
a determination that at least one common network slice simultaneous registration group value is associated with the first single network slice selection assistance information and all single network slice selection assistance information in the allowed NSSAI,
the configuration update command comprising a new allowed NSSAI that includes the first single network slice selection assistance information.

10. The network entity according to any one of claims 8 or 9, wherein the executing means is further adapted to
after a network slice-specific authentication and authorization procedure for a first single network slice selection assistance information associated with the requested network slice is successfully completed, send a configuration update command to the user equipment to update the user equipment configuration, based on
a determination that no common network slice simultaneous registration group value is associated with the first single network slice selection assistance information and all single network slice selection assistance information in the allowed NSSAI for the user equipment, and
a determination that the first single network slice selection assistance information has a higher priority than all single network slice selection assistance information in the allowed NSSAI for the user equipment,
the configuration update command comprising a new allowed NSSAI for the user equipment, the new allowed NSSAI including the first single network slice selection assistance information.

11. The network entity according to any one of claims 8 to 10, comprising, if the allowed NSSAI for the user equipment does not exist, the sending of the configuration update command to the user equipment to update the user equipment configuration of the user equipment,
of claim 8 is based on
a determination that no common network slice simultaneous registration group value is associated with the first single network slice selection assistance information and all single network slice selection assistance information in the most recent requested NSSAI,
of claim 9 is based on
a determination that at least one common network slice simultaneous registration group value is associated with the first single network slice selection assistance information and all single network slice selection assistance information in the most recent requested NSSAI.
and of claim 10 is based on
a determination that no common network slice simultaneous registration group value is associated with the first single network slice selection assistance information and all single network slice selection assistance information in the most recent requested NSSAI, and
a determination that the first single network slice selection assistance information has a higher priority than all single network slice selection assistance information in the most recent requested NSSAI.

12. The network entity according to any one of claims 8 to 11, wherein the executing means is adapted to carry out the steps assigned to the executing means of any one of claims 10 to 14, based on a determination that a user equipment sends via the registration request an indication that it supports receiving a pending NSSAI.

13. The network entity according to any one of claim 8 to 12, wherein
the configuration update command comprises an indication that the user equipment is to perform registration to register with the network, based on a determination
that a network slice-specific authentication and authorization procedure for a single network slice selection assistance information requested by the user equipment during registration to the network entity is successfully completed,
that an indication that the user equipment does not support receiving a pending NSSAI is received, and
that no common network slice simultaneous registration group value is associated with the single network slice selection assistance information and all single network slice selection assistance information in the allowed NSSAI.

14. The network entity according to claim 13, wherein the indication that the user equipment is to perform registration is an information element in the configuration update command, and wherein the executing means is further adapted to set a registration requested bit of the information element to a value which indicates that the user equipment is to perform registration.

15. A computer program product comprising instructions which, when the computer program product is executed by a computer, cause the computer to carry out the method of any one of claims 1 to 4.
